# EUROPÄISCHE PATENTANMELDUNG

(11) **EP 4 212 744 A1**
(43) Veröffentlichungstag der Anmeldung: **19.07.2023**
(21) Anmeldenummer: 23150084.4
(22) Anmeldetag: 03.01.2023
(51) Int. Cl.: F16B 25/00

(54) **VERANKERUNGSEINHEIT ZUM VERANKERN IN EINEM BOHRLOCH IN EINEM MATERIAL, VERANKERUNGSANORDNUNG MIT EINER DERARTIGEN VERANKERUNGSEINHEIT UND VERFAHREN ZUM HERSTELLEN EINER DERARTIGEN VERANKERUNGSANORDNUNG**

(30) Priorität: 17.01.2022 DE 102022200441
(71) Anmelder: CBP Guideway Systems GmbH, 80638 München (DE)
(72) Erfinder: Feix, Jürgen, 80638 München (DE)
(74) Vertreter: Rau, Schneck & Hübner Patentanwälte Rechtsanwälte PartGmbB

(57) **Zusammenfassung**

Eine Verankerungseinheit zum Verankern in einem Bohrloch (3) in einem Material (2) umfasst ein Verankerungselement (6) mit einem eine Längsachse (13) aufweisenden Grundkörper (12) und mit einem an dem Grundkörper (12) angeordneten Schneidgewinde (7) zum Einschneiden in eine Innenwand des Bohrlochs (3). Die Verankerungseinheit umfasst ferner ein an dem Grundkörper (12) befestigtes Zug-/Druck-Element (8), dessen Au-βendurchmesser kleiner ist als ein Schneidgewindedurchmesser des Schneidgewindes (7) und wobei das Zug-/Druck-Element (8) sich parallel zur Längsachse (13) erstreckt.

## Beschreibung

Die vorliegende Patentanmeldung nimmt die Priorität der deutschen Patentanmeldung DE 10 2022 200 441.8 in Anspruch, deren Inhalt durch Bezugnahme hierin aufgenommen wird.

Die Erfindung betrifft eine Verankerungseinheit zum Verankern in einem Bohrloch in einem Material, eine Verankerungsanordnung mit einer derartigen Verankerungseinheit sowie ein Verfahren zum Herstellen einer derartigen Verankerungsanordnung.

Zum Herstellen einer Verankerung in einem Material, insbesondere in Beton, ist es bekannt, Verankerungselemente mit selbstschneidendem Gewinde in ein Bohrloch einzudrehen. Insbesondere bei tiefliegenden Verankerungen ist der Kraftaufwand enorm. Es besteht das Risiko, dass das Verankerungselement infolge einer Überbeanspruchung beim Eindrehen beschädigt wird oder versagt. Der Herstellungsaufwand für ein Verankerungselement in einer Tiefenbohrung ist groß. Derartige Verankerungselemente sind teuer in der Herstellung.

Der Erfindung liegt die Aufgabe zugrunde, eine verbesserte Verankerung, insbesondere für eine Tiefenbohrung, bereitzustellen, wobei insbesondere der Aufwand für die Herstellung einer Verankerungseinheit reduziert ist und die Verankerungseinheit insbesondere robust ausgeführt ist.

Diese Aufgabe ist erfindungsgemäß gelöst durch eine Verankerungseinheit mit den im Anspruch 1 angegebenen Merkmalen, durch eine Verankerungsanordnung mit den im Anspruch 8 angegebenen Merkmalen sowie durch ein Verfahren mit den im Anspruch 12 angegebenen Merkmalen.

Erfindungsgemäß wurde erkannt, dass eine Verankerungseinheit besonders robust ausgeführt ist, wenn ein Zug-/Druck-Element an einem Verankerungselement befestigt ist und insbesondere unlösbar mit dem Verankerungselement gekoppelt ist. Unlösbar gekoppelt im Sinne der Erfindung bedeutet, dass die Fügeverbindung zwischen dem Verankerungselement und dem Zug-/Druck-Element nicht zerstörungsfrei gelöst werden kann. Insbesondere sind das Verankerungselement und das Zug-/Druck-Element in drehmomentübertragender Weise miteinander gekoppelt. Der Erfindung liegt die Erkenntnis zugrunde, dass das Verankerungselement einerseits und das Zug-/Druck-Element andererseits jeweils separat voneinander in unkomplizierter Weise und insbesondere mit reduziertem Herstellungsaufwand hergestellt und anschließend miteinander gefügt werden können. Der Gesamtherstellungsaufwand ist reduziert. Die so gebildete Verankerungseinheit ist aufgrund der unlösbaren Kopplung besonders robust.

Die erfindungsgemäße Verankerungseinheit ist insbesondere einteilig ausgeführt. Die Verankerungseinheit besteht insbesondere ausschließlich aus dem Verankerungselement und dem Grundkörper.

Die Verankerungseinheit dient zum Verankern in einem Bohrloch in einem Material, insbesondere in einem harten Material, insbesondere in Beton. Die Verankerungseinheit kann auch in einem Bohrloch im Erdreich, Fels, Stahl, Kunststoff oder in Holz verankert werden.

Vorteilhaft ist es, wenn das Bohrloch als Stufenbohrung ausgeführt ist mit einem innenliegenden Bohrlochabschnitt, der einen ersten Durchmesser aufweist, und einem außenliegenden Bohrlochabschnitt, der einen zweiten Durchmesser aufweist, der größer ist als der erste Durchmesser. Insbesondere ist der zweite Durchmesser größer als ein Außendurchmesser des Verankerungselements, insbesondere als ein Gewindedurchmesser eines Schneidgewindes des Verankerungselements. Dadurch ist das Verankern des Verankerungselements bei großen Bohrlochtiefen vereinfacht und insbesondere der Eindrehwiderstand beim Eindrehen des Verankerungselements reduziert. Insbesondere kann das Verankerungselement im Wesentlichen widerstandslos und insbesondere berührungsfrei entlang des außenliegenden Bohrlochabschnitts zu dem innenliegenden Bohrlochabschnitt geführt und dort verankert werden. Es ist denkbar, den Zwischenraum zwischen Innenwand des Bohrlochs, insbesondere des außenliegenden Bohrlochabschnitts, und der Außenwand des Zug-/Druck-Elements, zu verfüllen, insbesondere mit einem Verbundmaterial, insbesondere mit einem aushärtbaren Material, insbesondere Mörtel und/oder Kunststoffharz, insbesondere Epoxidharz. Eine Stufenbohrung kann insbesondere bei einer Verwendung eines zweiten Verankerungselements genutzt werden, wobei das zweite Verankerungselement innenliegend, also mit selbstschneidendem Außengewinde, oder als außenliegende Endverankerung ausgeführt sein kann.

Eine Längsachse des Bohrlochs ist insbesondere senkrecht zu einer äußeren Oberfläche des das Bohrloch umgebenden Materials orientiert. Die Einbringung des Bohrlochs in das Material ist dadurch vereinfacht. Es sind aber auch Anwendungen möglich, bei welchen die Bohrlochlängsachse gegenüber der Oberfläche des Materials geneigt angeordnet ist, wobei ein Neigungswinkel kleiner ist als 90° und insbesondere größer oder gleich 30° ist, insbesondere größer oder gleich 45°, insbesondere größer oder gleich 60°, insbesondere größer oder gleich 70°, insbesondere größer oder gleich 75°, insbesondere größer oder gleich 80°, insbesondere größer oder gleich 85° und insbesondere größer oder gleich 88°.

Bei einer geneigten Anordnung der Bohrlochlängsachse kann eine außenliegende Verankerung besonders vorteilhaft dadurch erfolgen, dass das außenliegende Verankerungselement eine Keilscheibe und/oder eine Keilringscheibe, die auch als Nord-Lock-Scheibe bezeichnet wird, verwendet wird.

Das Verankerungselement weist einen Grundkörper auf, der insbesondere entlang seiner Längsachse zylindrisch ausgeführt ist. Der Grundkörper kann entlang seiner Längsachse zumindest teilweise hohlprofilförmig, insbesondere hohlzylindrisch und/oder mit Vollquerschnitt, also als Massivbauteil, ausgeführt sein.

An dem Grundkörper ist ein Schneidgewinde angeordnet und insbesondere einteilig an dem Grundkörper ausgebildet. Das Schneidgewinde ist insbesondere ein Außengewinde. Das Schneidgewinde erstreckt sich an dem Grundkörper entlang der Längsachse über mindestens eine vollständige Umdrehung, insbesondere mindestens 1,5 Umdrehungen, insbesondere mindestens zwei Umdrehungen, insbesondere mindestens 2,5 Umdrehungen und insbesondere mindestens drei Umdrehungen. Insbesondere erstreckt sich das Schneidgewinde an dem Grundkörper entlang von mindestens 50 % seiner Länge, insbesondere von mindestens 60 % der Länge, insbesondere von mindestens 70 % der Länge, insbesondere von mindestens 80 % der Länge, insbesondere von mindestens 90 % der Länge, insbesondere von mindestens 95 % der Länge und insbesondere entlang der vollständigen Länge des Grundkörpers. Das Schneidgewinde ermöglicht ein direktes und unmittelbares Einschneiden einer Gewindewendel in eine Innenwand des Bohrlochs.

Das Zug-/Druck-Element ist insbesondere stabförmig oder stangenförmig ausgeführt. Das Zug-/Druck-Element weist eine Querschnittsfläche auf, die im Wesentlichen eine runde Außenkontur aufweist, an der insbesondere ein Außengewinde angebracht sein kann. Es ist auch denkbar, dass die Querschnittsfläche eine unrunde Außenkontur, insbesondere eine polygonförmige Außenkontur, insbesondere viereckig, sechseckig oder achteckig, aufweist. Insbesondere ist die Länge des Zug-/Druck-Elements größer und insbesondere deutlich größer als ein maximaler Durchmesser der Querschnittsfläche. Insbesondere beträgt die Länge mindestens das Fünffache, insbesondere mindestens das Zehnfache, insbesondere mindestens das Zwanzigfache, insbesondere mindestens das Fünfundzwanzigfache, insbesondere mindestens das Fünfzigfache, insbesondere mindestens das Einhundertfache, insbesondere mindestens das Fünfhundertfache und insbesondere höchstens das Eintausendfache des maximalen Durchmessers der Querschnittsfläche. Das Zug-/Druck-Element dient insbesondere zum Übertragen von Zugbeanspruchungen und/oder Druckbeanspruchungen. Das Zug-/Druck-Element ist insbesondere als Bewehrungsstange ausgeführt und kann insbesondere ein Außengewinde, insbesondere ein Außen-Grobgewinde, ein metrisches Außengewinde und/oder ein Außenfeingewinde aufweisen.

Das Zug-/Druck-Element dient insbesondere auch zum Verankern der Verankerungseinheit. Mit dem Zug-/Druck-Element kann das zum Eindrehen erforderliche Eindreh-Drehmoment von einem Werkzeug auf die Verankerungseinheit und insbesondere über das Zug-/Druck-Element in drehmomentübertragender Weise auf das Verankerungselement übertragen werden.

Vorteilhaft ist es, wenn an dem Zug-/Druck-Element und/oder an dem Verankerungselement ein Drehmomentübertragungsabschnitt angeordnet und insbesondere einteilig an dem Zug-/Druck-Element ausgebildet ist. Der Drehmomentübertragungsabschnitt kann beispielsweise durch einen einteilig an dem Zug-/Druck-Element angeformten Längsabschnitt ausgebildet sein, der eine senkrecht zur Längsachse unrunde Kontur aufweist, insbesondere eine Außen-Sechskantkontur. Es sind auch andere unrunde Konturen möglich, insbesondere gängige Werkzeugkonturen.

Der Drehmomentübertragungsabschnitt kann auch durch ein Außengrobgewinde gebildet sein, das an dem Bewehrungsstab ohnehin vorhanden sein kann.

Zusätzlich oder alternativ ist es möglich, dass das Verankerungselement, insbesondere am Grundkörper, einen Drehmomentübertragungsabschnitt aufweist. Der Drehmomentübertragungsabschnitt ist insbesondere an dem Grundkörper einteilig ausgeführt und insbesondere daran einteilig angeformt. Der Drehmomentübertragungsabschnitt am Grundkörper kann zur Übertragung eines Eindreh-Drehmoments auf den Grundkörper dienen. Dadurch ist es vereinfacht, den Grundkörper unmittelbar mittels eines Werkzeugs mit dem Eindreh-Drehmoment zu beaufschlagen. Eine Beaufschlagung des Zug-/Druck-Elements mit einem Eindreh-Drehmoment ist dadurch entbehrlich.

Das Zug-/Druck-Element weist einen Außendurchmesser auf, der kleiner ist als ein Schneidgewindedurchmesser des Schneidgewindes. Das Risiko, dass das Zug-/Druck-Element beim Eindrehen der Verankerungseinheit mit dem Material, insbesondere einer Innenseite des Bohrlochs, kollidiert, ist reduziert und insbesondere ausgeschlossen. Das Zug-/Druck-Element erstreckt sich insbesondere in einer Richtung parallel zur Längsachse des Grundkörpers und ist insbesondere koaxial zur Längsachse am Grundkörper angeordnet.

Eine Verankerungseinheit gemäß Anspruch 2 ist leichtbauend und materialschonend ausgeführt. Die unlösbare Kopplung zwischen Verankerungselement und Zug-/Druck-Element ist dadurch vereinfacht und insbesondere verbessert. Insbesondere können das Zug-/Druck-Element und das Verankerungselement entlang der Längsachse überlappend angeordnet sein. Dadurch kann eine vergrößerte Fügefläche, insbesondere eine vergrößerte Klebefläche, bereitgestellt werden. Die Sicherheit der Fügeverbindung ist dadurch erhöht. Die Verankerungseinheit kann insbesondere als Bewehrungsanschluss genutzt werden, indem der Hülsengrundkörper dazu dient, ein zweites Zug-/Druck-Element aufzunehmen und entsprechend mit dem unlösbar gekoppelten Zug-/Druck-Element lösbar zu koppeln.

Der Grundkörper weist eine Bohrung auf und ist als Hülsengrundkörper ausgeführt. Die Bohrung kann in einer Ebene senkrecht zur Längsachse zumindest abschnittsweise rund oder unrund, insbesondere polygonal oder oval ausgeführt sein.

Eine Verankerungseinheit gemäß Anspruch 3 vereinfacht die Kopplung von Verankerungselement und Zug-/Druck-Element. Insbesondere kann eine Verschraubung des Zug-/Druck-Elements an einem Gewinde der Bohrung des Grundkörpers eine Vorbefestigung ermöglichen.

Eine Verankerungseinheit gemäß Anspruch 4 ermöglicht eine stabilere Kopplung zwischen Verankerungselement und Zug-/Druck-Element.

Eine Verankerungseinheit gemäß Anspruch 5 ermöglicht eine unkomplizierte Fügeverbindung. Insbesondere eine Schweißverbindung an der Stirnwand des Grundkörpers ist unkompliziert ausführbar.

Eine Fügeverbindung gemäß Anspruch 6 ist besonders robust.

Eine Verankerungseinheit gemäß Anspruch 7 weist einen besonders robusten Grundkörper auf.

Eine Verankerungsanordnung gemäß Anspruch 8 weist im Wesentlichen die Vorteile der Verankerungseinheit gemäß Anspruch 1 auf, worauf hiermit verwiesen wird.

Eine Verankerungsanordnung gemäß Anspruch 9 vereinfacht das Aufbringen von Druckbeanspruchungen in das Material. Dazu dient ein zweites Verankerungselement, das lösbar mit der Verankerungseinheit koppelbar ist, insbesondere lösbar mit dem Zug-/Druck-Element.

Eine Verankerungsanordnung gemäß Anspruch 10 vereinfacht zusätzlich das Aufbringen von Druckbeanspruchungen.

Eine Verankerungsanordnung gemäß Anspruch 11 weist eine erhöhte Flexibilität beim Aufbringen und Anordnen des zweiten Verankerungselements auf.

Ein Verfahren gemäß Anspruch 12 vereinfacht das Herstellen der Verankerungsanordnung. Die Verankerungseinheit kann unmittelbar in einem Bohrloch verankert werden.

Sowohl die in den Patentansprüchen angegebenen Merkmale als auch die in der nachfolgenden Beschreibung von Ausführungsbeispielen der erfindungsgemäßen Verankerungseinheit angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung von Ausführungsbeispielen anhand der Zeichnung. Es zeigen:
- Fig. 1: einen Längsschnitt durch eine Verankerungsanordnung mit zwei im Material verankerten Verankerungselementen,
- Fig. 2: eine Fig. 1 entsprechende Darstellung, wobei das zweite Verankerungselement außenliegend am Material angeordnet ist,
- Fig. 3: eine Fig. 1 entsprechende Darstellung mit nur einem einzigen Verankerungselement,
- Fig. 4: eine vergrößerte, teilgeschnittene Seitenansicht eines Verankerungselements mit Hülsengrundkörper,
- Fig. 5: eine Schnittansicht gemäß Schnittlinie V-V in Fig. 4,
- Fig. 6: eine Fig. 5 entsprechende Darstellung eines Verankerungselements gemäß einem weiteren Ausführungsbeispiel,
- Fig. 7: eine vergrößerte Detailansicht einer Verankerungsanordnung mit einem Verankerungselement gemäß einem weiteren Ausführungsbeispiel mit Kontermuttern,
- Fig. 8: eine Fig. 7 entsprechende Darstellung einer Verankerungsanordnung mit einem Verankerungselement gemäß einem weiteren Ausführungsbeispiel mit Schrumpfschlauch,
- Fig. 9: eine vergrößerte, teilgeschnittene Ansicht einer Verankerungseinheit mit zwei Zug-/Druck-Elementen,
- Fig. 10: eine vergrößerte, teilgeschnittene Ansicht eines Verankerungselements gemäß einem weiteren Ausführungsbeispiel,
- Fig. 11: eine Ansicht gemäß XI in Fig. 10,
- Fig. 12: eine teilgeschnittene Seitenansicht einer Verankerungseinheit mit einem Verankerungselement gemäß einem weiteren Ausführungsbeispiel mit einem Koppelelement,
- Fig. 13: eine Fig. 12 entsprechende Seitenansicht einer Verankerungseinheit mit einem Verankerungselement gemäß einem weiteren Ausführungsbeispiel in Form einer Spannmuffe,
- Fig. 14: eine Ausgestaltung einer Verankerungseinheit, bei der das Verankerungselement und das Zug-/Druck-Element verklebt sind,
- Fig. 15: eine Fig. 14 entsprechende Ausführung, bei der das Verankerungselement einen Mittelstopp aufweist,
- Fig. 16: eine weitere Ausgestaltung einer Verankerungseinheit in Form eines Fließpressmuffenstoßes,
- Fig. 17: einen Längsschnitt durch das Verankerungselement gemäß Fig. 16,
- Fig. 18: eine Fig. 17 entsprechende Darstellung eines Verankerungselements mit Reduzierabschnitt,
- Fig. 19: eine Seitenansicht einer weiteren Verankerungseinheit,
- Fig. 20: eine weitere Ausgestaltung einer Verankerungseinheit, bei der das Verankerungselement und das Zug-/Druck-Element miteinander verschweißt sind, und
- Fig. 21: eine Fig. 1 entsprechende Darstellung einer Verankerungsanordnung in einer Stufenbohrung,
- Fig. 22: eine Fig. 21 entsprechende Darstellung einer Verankerungsanordnung mit zusätzlichen Koppelelementen, und
- Fig. 23: eine Fig. 2 entsprechende Darstellung mit einem versenkt angeordneten, außenliegenden Verankerungselement.

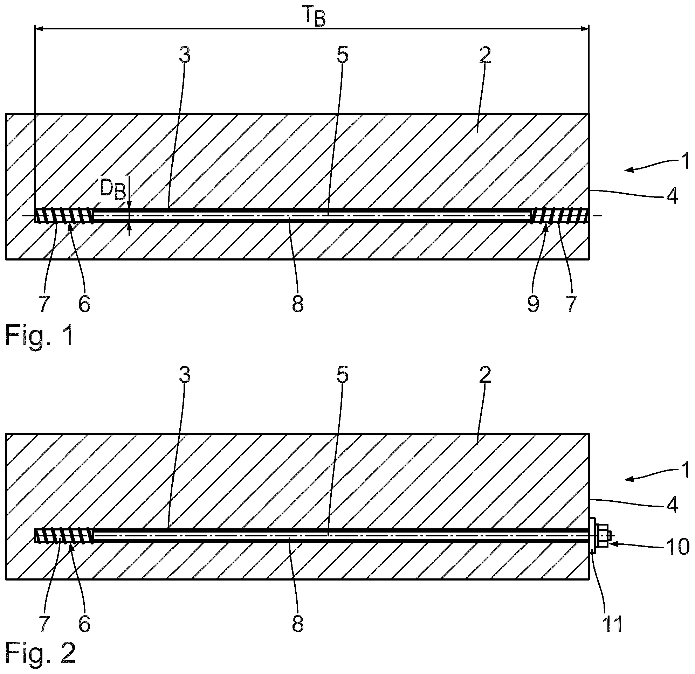

Fig. 1 zeigt einen Längsschnitt einer als Ganzes mit 1 bezeichneten Verankerungsanordnung. In einem Material 2, insbesondere Beton, ist ein Bohrloch 3 angeordnet, das sich ausgehend von einer Oberseite 4 des Materials 2 entlang einer Bohrloch-Längsachse 5 erstreckt. Das Bohrloch 3 weist einen Bohrlochdurchmesser D_{B} und eine Bohrlochtiefe T_{B} auf. Die Bohrlochtiefe T_{B} entspricht der Längserstreckung des Bohrlochs 3 entlang der Bohrloch-Längsachse 5 ausgehend von der Oberseite 4. Das Bohrloch 3 ist eine Tiefenbohrung. Es gilt: T_{B} > 5 x D_{B}, insbesondere T_{B} > 10 x D_{B}, insbesondere T_{B} ≥ 20 x D_{B}, insbesondere T_{B} ≥ 25 x D_{B}, insbesondere T_{B} >_ 50 x D_{B,} insbesondere T_{B} ≥ 100 x D_{B} und insbesondere T_{B} ≤ 1000 x D_{B}.

In dem Bohrloch 3, insbesondere benachbart zu dem Bohrlochgrund, also dem der Oberseite 4 gegenüberliegenden, innenliegenden Ende des Bohrlochs 3, ist ein Verankerungselement 6 angeordnet und in dem Bohrloch 3 verankert. Das Verankerungselement 6 weist ein Schneidgewinde 7 auf, das als Außengewinde ausgeführt ist.

Mit dem Verankerungselement 6 ist ein Bewehrungsstab 8 an seinem ersten Ende lösbar gekoppelt. Der Bewehrungsstab ist ein Zug-/Druck-Element 8. Das Verankerungselement 6 und das Zug-/Druck-Element 8 bilden eine Verankerungseinheit. An seinem zweiten Ende ist das Zug-/Druck-Element 8 mit einem zweiten Verankerungselement 9, insbesondere ebenfalls lösbar, gekoppelt. Das Zug-/Druck-Element 8 kann mit dem Verankerungselement 6 und/oder mit dem zweiten Verankerungselement 9 auch jeweils unlösbar gekoppelt sein, insbesondere geklebt, verschweißt und/oder mechanisch gefügt, insbesondere durch Umformen, insbesondere durch Pressen. Das zweite Verankerungselement 9 ist insbesondere ähnlich und insbesondere identisch zu dem ersten Verankerungselement 6 ausgeführt und weist insbesondere ein Schneidgewinde 7 auf. Wie aus Fig. 1 ersichtlich, ist das Schneidgewinde 7 des zweiten Verankerungselements 9 mit umgekehrter Orientierung ausgeführt. Gemäß dem gezeigten Ausführungsbeispiel ist also das Schneidgewinde 7 an dem zweiten Verankerungselement 9 als sogenanntes Linksgewinde ausgeführt. Es ist auch denkbar, dass beide Schneidgewinde 7 mit gleicher Orientierung ausgeführt sind.

Dadurch, dass das Zug-/Druck-Element 8 mit beiden Verankerungselementen 6, 9 jeweils gekoppelt ist und die Verankerungselemente 6, 9 in dem Bohrloch 3 verankert sind, kann das Zug-/Druck-Element 8 entlang der Bohrloch-Längsachse 5 Zug- und/oder Druckkräfte übertragen.

Gemäß dem gezeigten Ausführungsbeispiel ist die Bohrloch-Längsachse 5 und damit auch die Längsorientierung der Verankerungseinheit 6, 9 horizontal orientiert. Es ist grundsätzlich denkbar, dass die Orientierung der Verankerungseinheit gegenüber der Horizontalen geneigt und insbesondere senkrecht dazu, also vertikal, orientiert ist.

Fig. 2 zeigt eine alternative Ausgestaltung einer Verankerungsanordnung 1, die im Wesentlichen dem vorherigen Ausführungsbeispiel entspricht. Ein Unterschied gegenüber dem vorherigen Ausführungsbeispiel besteht darin, dass das zweite Verankerungselement 10 außerhalb des Bohrlochs angeordnet und insbesondere an der Oberseite 4 des Materials 2 abgestützt ist.

Das zweite Verankerungselement 10 ist insbesondere als Befestigungsmutter ausgeführt mit einem Innengewinde, das mit einem Außengewinde des Zug-/Druck-Elements korrespondiert. Insbesondere ist das Außengewinde des Zug-/Druck-Elements 8 ein Außen-Grobgewinde. Die Befestigungsmutter 10 ist insbesondere unmittelbar auf das Zug-/Druck-Element 8 aufgeschraubt und mittels einer Lastverteilscheibe an der Oberseite 4 abgestützt. In der Verankerungsanordnung gemäß Fig. 2 dient das Zug-/Druck-Element 8 ausschließlich zum Übertragen von Zugkräften, ist also ein Zugelement. Mittels der Befestigungsmutter 10 kann eine Vorspannung gezielt eingestellt werden. Um zu vermeiden, dass das zweite Verankerungselement 10 und die Lastverteilscheibe 11 an der Oberseite 4 des Materials 2 vorstehen, ist es auch möglich, eine entsprechende Vertiefung an der Oberseite 4 vorzunehmen, sodass eine tiefer liegende Stützfläche für die Lastverteilscheibe 11 und das zweite Verankerungselement 10 gebildet ist.

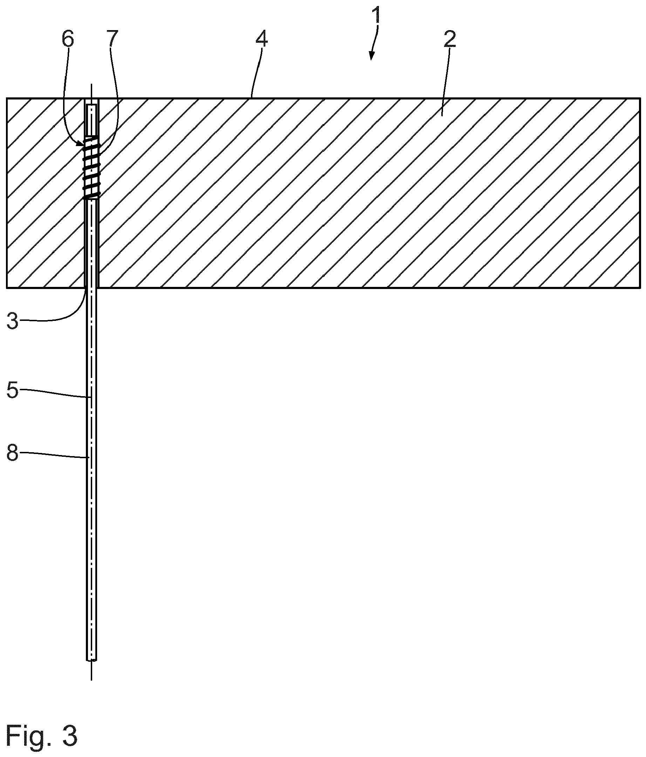

Die Verankerungsanordnung 1 gemäß Fig. 3 unterscheidet sich von den beiden vorherigen Verankerungsanordnungen dadurch, dass nur ein Verankerungselement 6 vorgesehen ist, das im Bohrloch 3 verankert ist. Der Bewehrungsstab 8 ist mit dem Verankerungselement 6 lösbar gekoppelt. Insbesondere ist das Bohrloch 3 als durchgängige Bohrung in dem Material 2 ausgeführt. Das Bohrloch 3 kann auch als Sacklochbohrung ausgeführt sein. In Abhängigkeit der jeweiligen Anwendung dient der Bewehrungsstab 8 als Zug-Element, als Druck-Element oder als kombiniertes Zug-/Druck-Element. Bei der Verankerungsanordnung 1 gemäß Fig. 3 ist die Bohrloch-Längsachse 5 vertikal orientiert. Das Zug-/Druck-Element 8 wird auch als Zug-/Druck-Pfahl bezeichnet.

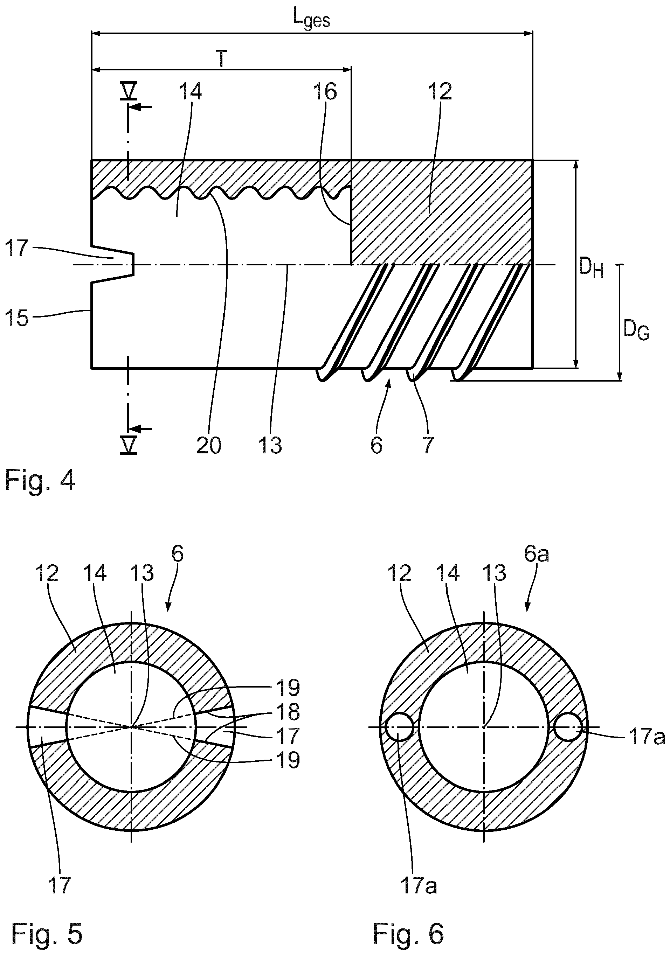

Nachfolgend wird anhand von Fig. 4 und 5 ein erstes Ausführungsbeispiel eines Verankerungselements näher erläutert. Das Verankerungselement 6 weist einen Grundkörper 12 auf, der im Wesentlichen hülsenartig ausgeführt ist. Der Grundkörper ist ein Hülsengrundkörper 12. Der Hülsengrundkörper 12 weist eine Längsachse 13 auf. Der Hülsengrundkörper 12 ist bezüglich der Längsachse 13 hohlzylindrisch ausgeführt und weist einen Hülsenaußendurchmesser D_{H} auf, der entlang der Längsachse 13 gemäß dem gezeigten Ausführungsbeispiel konstant ist.

Der Hülsengrundkörper 12 weist eine Bohrung 14 auf, die sich ausgehend von einer Stirnseite 15, die in Fig. 4 links dargestellt ist, aus entlang der Längsachse 13 erstreckt. Die Bohrung 14 weist entlang der Längsachse 13 eine Tiefe T auf, die gemäß dem gezeigten Ausführungsbeispiel kleiner ist als die Gesamtlänge L_{ges} des Verankerungselements 6. Vorteilhaft ist es, wenn gilt: L_{ges} ≥ 0,5 x T, insbesondere L_{ges} ≥ 0,6 x T, insbesondere L_{ges} ≥ 0,7 x T, insbesondere L_{ges} ≥ 0,8 x T, insbesondere L_{ges} ≥ 0,9 x T und insbesondere L_{ges} ≥ 0,95 x T.

Am Ende der Bohrung 14 ist ein Hülsenboden 16 angeordnet, der den Hülsengrundkörper 12 abschließt. Der Hülsengrundkörper 12 ist gemäß diesem Ausführungsbeispiel kappenförmig ausgeführt. Es ist auch denkbar, dass die Bohrung 14 durchgängig ausgeführt ist, der Hülsengrundkörper 12 also ohne Hülsenboden ausgeführt ist.

Bei dem Verankerungselement 6 erstreckt sich das Schneidgewinde 7 über vier Umdrehungen und insbesondere entlang der Längsachse 13 nur teilweise entlang der Gesamtlänge L_{ges}.

Das Schneidgewinde 7 weist einen Gewindedurchmesser D_{G} auf, der größer ist als der Hülsendurchmesser D_{H}. Insbesondere ist der Gewindedurchmesser D_{G} größer als der Bohrlochdurchmesser D_{B}. Insbesondere ist der Bohrlochdurchmesser D_{B} größer als der Hülsendurchmesser D_{H}.

Das Verankerungselement 6 weist an der Stirnseite 15, die ringflächenförmig ausgeführt ist, zwei schlitzartige Vertiefungen 17 auf, die einen Drehmomentübertragungsabschnitt bilden. In Umfangsrichtung um die Längsachse 13 sind die Vertiefungen 17 diametral gegenüberliegend zueinander angeordnet. Es ist denkbar, dass nur eine Vertiefung 17 oder mehr als zwei Vertiefungen 17 vorgesehen sind. Es ist insbesondere denkbar, dass der Abstand zwei benachbarter Vertiefungen 17 in Umfangsrichtung größer bzw. kleiner als 180° ist. Insbesondere ist der Abstand bei mehreren Vertiefungen 17 gleichmäßig in Umfangsrichtung verteilt.

Wie aus Fig. 5 erkennbar, sind die Seitenflanken 18 der jeweiligen Vertiefung 17 radial bezüglich der Längsachse 13 orientiert. Das bedeutet, dass die Öffnungsbreite der Vertiefung 17 in Umfangsrichtung um die Längsachse 13 mit radialem Abstand zur Längsachse 13 zunimmt. Dadurch, dass die Vertiefungen 17 diametral gegenüberliegend bezüglich der Längsachse 13 angeordnet sind, sind die jeweils korrespondierenden Seitenflanken 18 der gegenüberliegenden Vertiefungen 17 in einer gemeinsamen Radialebene 19 angeordnet, die die Längsachse 13 enthält. Diese Radialebenen 19 sind in Fig. 5 eingezeichnet und verlaufen senkrecht zur Zeichenebene in Fig. 5. Die Vertiefungen 17 ermöglichen beispielsweise ein unkompliziertes Aufsetzen eines Werkzeugeinsatzes, der beispielsweise in Form eines schlitzförmigen Schraubendrehers ausgeführt sein kann.

Die Vertiefungen 17 sind jeweils entlang der Längsachse 13 ausgehend von der Stirnseite 15 verjüngend ausgeführt. Das Einführen des Werkzeugs in die Vertiefungen 17 und dessen stabile, verrutschsichere Anordnung in der Vertiefung 17 ist dadurch vereinfacht und verbessert.

An einer Innenseite des Hülsengrundkörpers 12 ist ein Kopplungsabschnitt 20 ausgeführt. Der Kopplungsabschnitt 20 ist gemäß dem gezeigten Ausführungsbeispiel als Innen-Grobgewinde ausgeführt, das insbesondere einteilig an der Innenseite des Hülsengrundkörpers 12 ausgebildet ist. Der Kopplungsabschnitt 20 erstreckt sich entlang der Längsachse 13 maximal bis zur Tiefe T der Bohrung 14 und insbesondere über mindestens 50 % der Tiefe T, insbesondere mindestens 70 % der Tiefe T und insbesondere mindestens 90 % der Tiefe T.

Das Verankerungselement 6 kann mittels des Werkzeugs, das in die Vertiefungen 17 eingreift, in ein Bohrloch 3 eingedreht und mit dem Schneidgewinde 7 in das Bohrloch 3 eingeschnitten werden. Das Verankerungselement 6 ist dann im Bohrloch 3 verankert angeordnet.

Anschließend wird das Werkzeug entfernt und ein Zug-/Druck-Element 8 in das Bohrloch 3 bis zum Verankerungselement 6 eingeführt und dann mit dem bereits im Bohrloch 3 verankert angeordneten Verankerungselement 6 gekoppelt, insbesondere indem das Zug-/Druck-Element 8 mit einem Koppelgewinde an dem Kopplungsabschnitt 20 verschraubt wird.

Es ist auch möglich, dass das Zug-/Druck-Element 8 unlösbar mit dem Verankerungselement 6 gekoppelt ist. In diesem Fall wird die so gebildete Verankerungseinheit hergestellt, bevor die Verankerungseinheit im Bohrloch 3 verankert wird. Grundsätzlich denkbar ist es auch, dass zunächst das Verankerungselement 6 im Bohrloch 3 verankert wird und das Zug-/Druck-Element 8 mit dem bereits verankerten Verankerungselement gefügt, also unlösbar gekoppelt wird.

Im Folgenden wird unter Bezugnahme auf Fig. 6 ein weiteres Ausführungsbeispiel eines Verankerungselements beschrieben. Konstruktiv identische Teile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei dem Verankerungselement 6a ist der Drehmomentübertragungsabschnitt durch zwei kreisförmige Vertiefungen 17a gebildet. Die Vertiefungen 17a weisen jeweils eine geschlossene Außenkontur auf, wobei die jeweilige geschlossene Außenkontur vollständig innerhalb der ringförmigen Stirnseite 15 angeordnet ist. Die Außenkontur kann rund oder unrund ausgeführt sein. Vorteilhaft ist es, wenn die geschlossene Außenkontur exzentrisch zur Längsachse 13 angeordnet ist. Die Vertiefungen 17a sind insbesondere jeweils als Sacklochbohrungen ausgeführt, die sich von der Stirnseite 15 aus entlang der Längsachse 13 erstrecken.

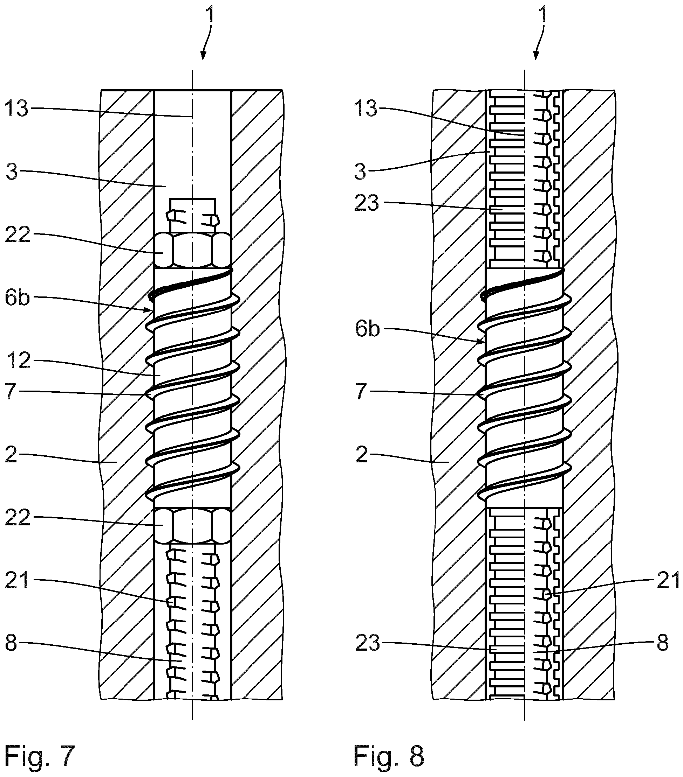

Bei der in Fig. 7 gezeigten Verankerungsanordnung 1 weist das Verankerungselement 6b ein Schneidgewinde 7 auf, das sich entlang der Gesamtlänge L_{ges} des Hülsengrundkörpers 12 erstreckt. Zudem ist die Bohrung 14 durchgängig ausgeführt. Das Zug-/Druck-Element 8 ist vollständig durch die Bohrung 14 des Verankerungselements 6b hindurchgeführt.

Das Zug-/Druck-Element 8 weist ein Außen-Grobgewinde 21 auf, das ein Koppelgewinde darstellt und mit dem Kopplungsabschnitt 20 des Verankerungselements 6b korrespondiert. Das Zug-/Druck-Element 8 ist mit dem Koppelgewinde 21 lösbar mit dem Verankerungselement 6b gekoppelt. An dem in Fig. 7 oben dargestellten Ende, mit dem das Zug-/Druck-Element 8 durch das Verankerungselement 6b hindurchgeführt ist, ist ein Koppelelement 22 in Form einer Kontermutter angeordnet. Die Kontermutter 22 weist ein Innengewinde auf, das mit dem Koppelgewinde 21 korrespondiert. Mittels der Kontermutter 22 ist das Verankerungselement 6b an dem Zug-/Druck-Element 8 vorgekontert, also daran fixiert. Durch die Kontermutter 22 ist das Risiko minimiert, dass sich das Verankerungselement 6b unbeabsichtigt von dem Zug-/Druck-Element 8 beim Einschneiden in das Bohrloch 3 löst.

Zusätzlich ist bei der Verankerungsanordnung 1 ein zweites Koppelelement 22 vorgesehen, das gemäß Fig. 7 unterhalb des Verankerungselements 6b angeordnet ist. Das zweite Koppelelement 22 ist ebenfalls als Kontermutter ausgeführt, die insbesondere identisch ist zu der anderen Kontermutter 22 ausgeführt ist. Das Verankerungselement 6b ist also beidseitig an dem Zug-/Druck-Element 8 gekontert.

Die Verankerungseinheit mit dem Verankerungselement 6b und dem Zug-/Druck-Element 8 und die zusätzlich vorgesehenen Kontermuttern 22 ermöglichen einen verbesserten Korrosionsschutz, insbesondere für das Koppelgewinde 21 und den Kopplungsabschnitt 20. Die Zuverlässigkeit der Verbindung zwischen dem Verankerungselement 6b und dem Zug-/Druck-Element 8 und damit die Zuverlässigkeit der Verankerungseinheit 1 insgesamt sind dadurch erhöht. Die Verbindung zwischen dem Verankerungselement 6b und dem Zug-/Druck-Element 8 kann insbesondere durch ein metrisches Gewinde und insbesondere durch ein Feingewinde ermöglicht werden.

Für die Verankerungsanordnung 1 ist es vorteilhaft, wenn die Verankerungseinheit, also das Verankerungselement 6b mit dem Zug-/Druck-Element 8, vor dem Eindrehen in das Bohrloch 3 miteinander gekoppelt und mittels der Kontermuttern 22 vorgekontert werden. In der vormontierten Anordnung kann dann die Verankerungseinheit in das Bohrloch 3 eingedreht werden. Die vormontierte Anordnung kann auch umfassen, dass das Zug-/Druck-Element 8 unlösbar mit dem Verankerungselement 6b gekoppelt wird, insbesondere durch Kleben.

Die Verankerungsanordnung 1 gemäß Fig. 8 entspricht im Wesentlichen der gemäß Fig. 7, wobei ein verbesserter Korrosionsschutz durch einen Schrumpfschlauch 23 gewährleistet ist, der das Zug-/Druck-Element 8 umgibt und insbesondere in radialer Richtung zwischen dem Verankerungselement 6b und dem Zug-/Druck-Element 8 angeordnet ist. In axialer Richtung bezogen auf die Bohrloch-Längsachse 5 erstreckt sich der Schrumpfschlauch 23 so weit, dass er beidseitig am Verankerungselement 6b vorsteht. Insbesondere erstreckt sich der Schrumpfschlauch 23 entlang der Bohrloch-Längsachse 5 über mindestens zwei, insbesondere mindestens drei, insbesondere mindestens vier und insbesondere mindestens fünf Gewindegänge des Koppelgewindes 21.

Der Schrumpfschlauch 23 kann entlang der Bohrloch-Längsachse 5 auch beabstandet zu dem Verankerungselement 6b und insbesondere als Korrosionsschutz für das Zug-/Druck-Element 8 angeordnet sein.

Der Schrumpfschlauch 23 ist insbesondere aus einem stabilen Material hergestellt und bildet insbesondere ein eigenstabiles Element, das auch als Hüllrohr oder Ripprohr bezeichnet werden kann. Das Hüllrohr oder Ripprohr 23 weist an seiner Außenseite Querrippen auf, die insbesondere axial zueinander beabstandet und insbesondere regelmäßig ausgeführt sind. Das Hüllrohr bzw. Ripprohr entspricht einem Drainageschlauch.

Der Schrumpfschlauch und/oder das Hüllrohr bzw. Ripprohr 23 verhindert einen unmittelbaren, insbesondere metallischen Kontakt zwischen dem Koppelgewinde 21 des Zug-/Druck-Elements 8 sowie des Zug-/Druck-Elements 8 selbst und einem in Fig. 8 nicht dargestellten Verfüllmaterial des Bohrlochs 3. Der, insbesondere ringförmig ausgebildete Zwischenraum zwischen dem Zug-/Druck-Element 8 und dem Schrumpfschlauch 23 kann mit einem Füllmaterial, insbesondere Fett, verpresst sein. Der Korrosionsschutz ist dadurch verbessert. Koppelelemente in Form von Kontermuttern können durch die Verwendung des Schrumpfschlauches 23 entbehrlich sein. Es ist aber trotzdem möglich, Kontermuttern auf dem Koppelgewinde 21 und unter dem Schrumpfschlauch 23 und/oder dem Hüllrohr bzw. dem Ripprohr aufzuschrauben.

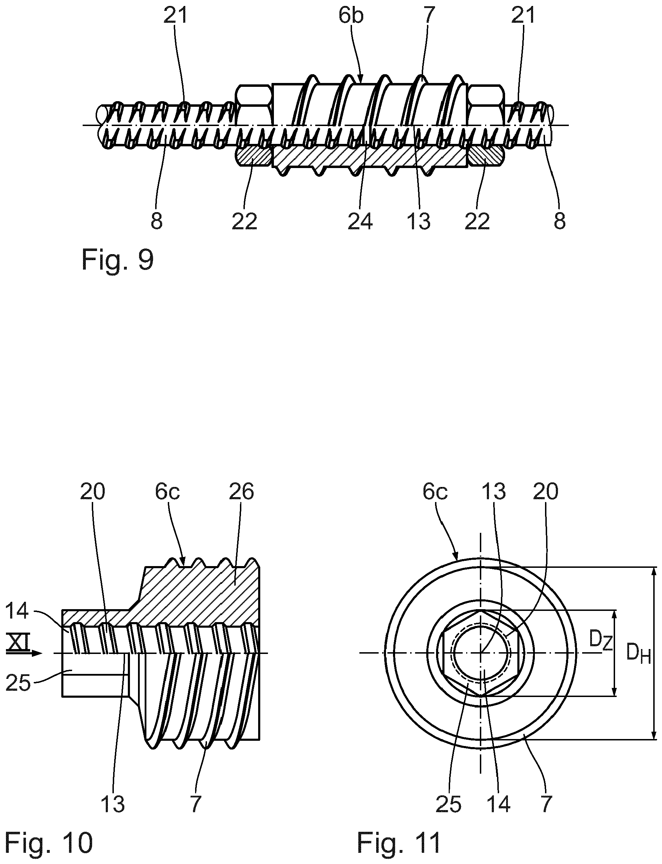

Die in Fig. 9 gezeigte Anordnung zeigt das Verankerungselement 6b mit den beiden Kontermuttern 22. Ein wesentlicher Unterschied gegenüber der Ausführung in Fig. 7 besteht darin, dass in dem Verankerungselement 6b zwei separate Zug-/Druck-Elemente 8 miteinander gekoppelt sind. Die beiden Zug-/Druck-Elemente 8 sind in axialer Richtung bezogen auf die Längsachse 13 innerhalb des Verankerungselements 6b durch einen Trennbereich 24 beabstandet voneinander angeordnet. Der Trennbereich 24 weist bei dem gezeigten Ausführungsbeispiel kein strukturelles Element auf, ist also eine Lücke innerhalb des Hülsengrundkörpers 12. Der Trennbereich 24 weist eine Axialerstreckung entlang der Längsachse 13 auf. Es ist auch denkbar, dass die beiden Zug-/Druck-Elemente 8 derart in das Verankerungselement 6b eingeschraubt sind, dass sie stirnseitig am Trennbereich 24 aneinander anliegen. In diesem Fall ist der Trennbereich 24 als Trennebene ausgeführt, die senkrecht zur Längsachse 13 orientiert ist.

Das Verankerungselement 6b gemäß Fig. 9 ist ein Koppelelement, da es zwei separate Zug-/Druck-Elemente 8 miteinander koppelt. Das Verankerungselement 6b kann insbesondere als Bewehrungsanschluss dienen. Insbesondere ist ein Verfahren denkbar, bei dem eine Verankerungseinheit mit einem vorgekontertem Zug-/Druck-Element 8 in einem Bohrloch verankert wird und nachträglich an dem Verankerungselement 6b ein weiteres Zug-/Druck-Element 8 lösbar gekoppelt wird.

Es ist möglich, dass das eine der Zug-/Druck-Elemente 8 oder beide Zug-/Druck-Elemente 8 unslösbar mit dem Verankerungselement 6b gekoppelt sind.

Im Folgenden wir unter Bezugnahme auf Fig. 10 und 11 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Bei dem Verankerungselement 6c ist der Hülsendurchmesser D_{H} nicht entlang der gesamten Länge L_{ges} vorgesehen. Das Verankerungselement 6c ist als sogenanntes Ankerstück ausgeführt, wobei sich an einen Hülsenabschnitt 26 mit dem Hülsendurchmesser D_{H} ein Zapfenabschnitt 25 anschließt, der insbesondere einteilig mit dem Hülsenabschnitt 26 ausgeführt ist.

Die Bohrung 14 mit dem als Innengewinde ausgeführten Kopplungsabschnitt 20 ist durchgängig ausgeführt.

Der Zapfenabschnitt 25 weist einen Außendurchmesser Dz auf, der kleiner ist als der Außendurchmesser D_{H} des Hülsenabschnitts 26, insbesondere höchstens 80 % des Hülsendurchmessers beträgt. Insbesondere gilt: D_{Z} ≤ 0,75 x D_{H}, insbesondere D_{Z} ≤ 0,7 x D_{H}, insbesondere D_{Z} ≤ 0,6 x D_{H}, insbesondere D_{Z} < 0,5 x D_{H} und insbesondere D_{Z} ≥ 0,3 x D_{H}. Der Zapfenabschnitt 25 ist insbesondere außengewindefrei ausgeführt.

Der Zapfenabschnitt 25 weist in einer Ebene senkrecht zur Längsachse 13 eine unrunde Außenkontur auf, insbesondere eine Außen-Sechskantkontur. Die unrunde Außenkontur des Zapfenabschnitts 25 dient als Drehmomentübertragungsabschnitt und vereinfacht damit das Eindrehen des Verankerungselements 6c in ein Bohrloch mittels eines Werkzeugs, insbesondere das maschinelle Eindrehen des Verankerungselements 6c in ein Bohrloch.

Das Schneidgewinde 7 ist ausschließlich am Hülsenabschnitt 26 angeordnet.

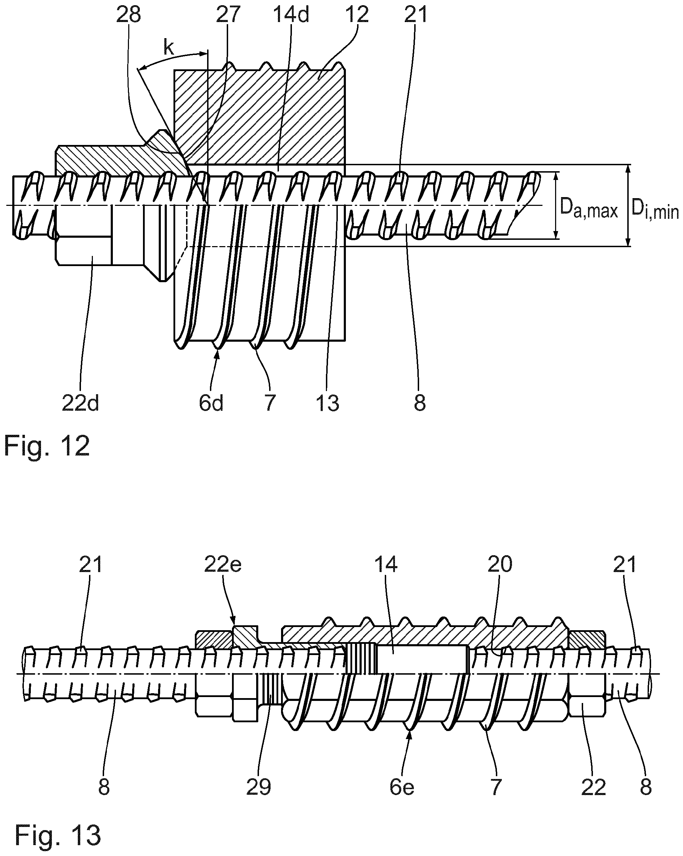

Im Folgenden wird unter Bezugnahme auf Fig. 12 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Die Bohrung 14d des Verankerungselements 6d ist zylindrisch ausgeführt, insbesondere gewindefrei. Wesentlich bei diesem Ausführungsbeispiel ist, dass ein minimaler Innendurchmesser D_{i, min} der Bohrung 14d größer ist als ein maximaler Außendurchmesser D_{a, max} des Zug-/Druck-Elementes 8. Der maximale Außendurchmesser D_{a, max} des Zug-/Druck-Elementes 8 entspricht dem Außendurchmesser des Koppelgewindes 21. Das bedeutet, dass das Zug-/Druck-Element 8 im Wesentlichen berührungsfrei durch das Verankerungselement 6d, insbesondere durch die Bohrung 14d geführt ist.

Eine unmittelbare Kopplung des Zug-/Druck-Elements 8 mit dem Verankerungselement 6d liegt nicht vor. Eine mittelbare Kopplung erfolgt mittels eines Koppelelements 22d. Das Koppelelement 22d ist mutterartig ausgeführt und weist ein Innengewinde auf, das mit dem Koppelgewinde 21 des Zug-/Druck-Elementes 8 korrespondiert. Das Koppelelelement 22d weist einen Außendurchmesser auf, der größer ist als der minimale Innendurchmesser D_{i, min}. Das Koppelelement 22d weist eine Konusfläche 27 auf, die einen Konuswinkel k definiert, der gegenüber einer zur Längsachse 13 senkrecht orientierten Ebene definiert ist. Der Konuswinkel k ist gemäß dem gezeigten Ausführungsbeispiel 30°. Der Konuswinkel kann auch größer oder kleiner als 30° sein und beträgt insbesondere zwischen 15° und 60°.

Das Verankerungselement 6d ist mittelbar mit dem Zug-/Druck-Element 8 über das Koppelelement 22d gekoppelt. Das Koppelelement 22d liegt stirnseitig mit der Konusfläche 27 an einer korrespondierenden Stützfläche 28 am Hülsengrundkörper 12 an. Das Koppelelement 22d dient insbesondere als Abstützung für Zugkräfte auf das Verankerungselement 6d, wobei die Zugkräfte gemäß Fig. 12 rechts vom Koppelelement 22d am Zug-/Druck-Element 8 angreifen, auf das Zug-/Druck-Element 8 wirken und über das Koppelelement 22d auf das Verankerungselement 6d übertragen werden. Entsprechend kann das Koppelelement 22d von links auf das Zug-/Druck-Element 8 wirkende Druckkräfte auf das Verankerungselement 6d übertragen.

Das Koppelelement 22d kann zusätzlich an der Konusfläche 27 mit der Stützfläche 28 unlösbar verbunden sein, insbesondere verklebt und/oder verschweißt.

Im Folgenden wird unter Bezugnahme auf Fig. 13 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Wie bei der Verankerungseinheit in Fig. 9 sind an das Verankerungselement 6e zwei separate Zug-/Druck-Elemente 8 lösbar gekoppelt.

An dem in Fig. 13 rechts dargestellten Ende erfolgt die Kopplung über das Koppelgewinde 21 des Zug-/Druck-Elements 8 in dem Kopplungsabschnitt 20 in dem Verankerungselement 6e in der an sich bereits beschriebenen Weise. Zusätzlich ist eine Kontermutter als Koppelelement 22 vorgesehen.

An dem gegenüberliegenden, in Fig. 13 links dargestellten Ende ist ein weiteres Koppelelement 22e in Form einer Spannmutter vorgesehen. Die Spannmutter 22e weist ein zu dem Koppelgewinde 21 korrespondierendes Innengewinde auf und ist mit diesem Innengewinde auf dem Zug-/Druck-Element 8 aufgeschraubt. Das Zug-/Druck-Element 8 ist durchgängig durch die Spannmutter 22e geführt. Zusätzlich weist die Spannmutter 22e einen Gewindekopplungsabschnitt 29 auf. Der Gewindekopplungsabschnitt 29 ist hülsgenförmig ausgeführt und weist an seiner Außenseite ein metrisches Außengewinde auf, das in ein korrespondierendes metrisches Innengewinde an einer Innenseite der Bohrung 14 eingreift. Das metrische Innengewinde in dem Verankerungselement 6e bildet den Kopplungsabschnitt. Insbesondere ist es dadurch möglich, eine Vorspannung auf die Verankerungseinheit sowohl in Zug- als auch in Druckrichtung aufzubringen. Die Verankerungseinheit umfassend das Verankerungselement 6e, die beiden Bewehrungsstäbe 8 und die Spannmutter 22e, bildet eine Spannmuffe.

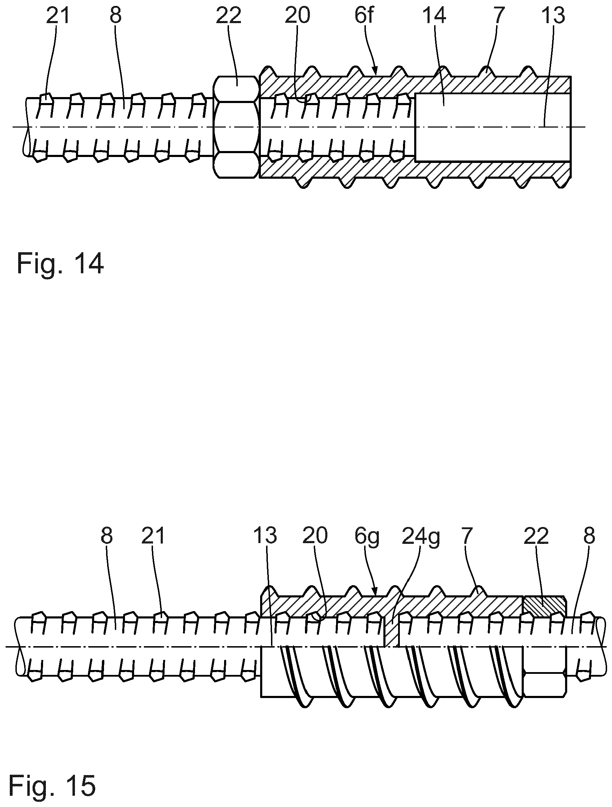

Im Folgenden wird unter Bezugnahme auf Fig. 14 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

Die in Fig. 14 gezeigte Verankerungseinheit mit dem Zug-/Druck-Element 8, dem Verankerungselement 6f und der Kontermutter 22 als Koppelelement ist ähnlich der Anordnung gemäß Fig. 9, allerdings ohne das zweite Zug-/Druck-Element und ohne die zweite Kontermutter.

Ein weiterer Unterschied besteht darin, dass das Verankerungselement 6f mit dem Zug-/Druck-Element 8 unlösbar durch Kleben verbunden ist.

Dazu ist insbesondere eine flächenhafte Verklebung vorgesehen, die zwischen einer äußeren Mantelfläche des Zug-/Druck-Elementes 8 und einer inneren Mantelfläche des Verankerungselements 6f, also an der Innenseite der Bohrung 14, ausgeführt ist. Zwischen dem Zug-/Druck-Element 8 und dem Verankerungselement 6f bildet sich eine Klebeschicht aus, die aus Darstellungsgründen in Fig. 14 nicht gezeigt ist. Als Klebstoff dient insbesondere Epoxidharz.

Zusätzlich oder alternativ zu der Klebeverbindung kann eine unlösbare Kopplung auch durch Schweißen hergestellt sein. Das Zug-/Druck-Element 8 und das damit verklebte und/oder verschweißte Verankerungselement 6f bilden eine einstückige Verankerungseinheit.

Im Folgenden wird unter Bezugnahme auf Fig. 15 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten g.

Das Verankerungselement 6g dient wie das Ausführungsbeispiel in Fig. 9 zum Koppeln zweier Zug-/Druck-Elemente 8. Als Trennbereich 24g ist im Inneren der Bohrung 14 ein strukturelles Element angeordnet, dass als durchgängige Trennwand ausgeführt ist. Die Trennwand wird auch als Mittelstopp bezeichnet. Bezogen auf die Gesamtlänge L_{ges} des Verankerungselements 6g ist die Trennwand 24g etwa mittig und insbesondere genau mittig angeordnet.

Grundsätzlich ermöglicht die Trennwand 24g ein lösbares Koppeln des Verankerungselements 6g mit den beiden Zug-/Druck-Elementen 8, insbesondere indem diese in das Innengewinde eingeschraubt werden und axial an der Trennwand 24g anliegen.

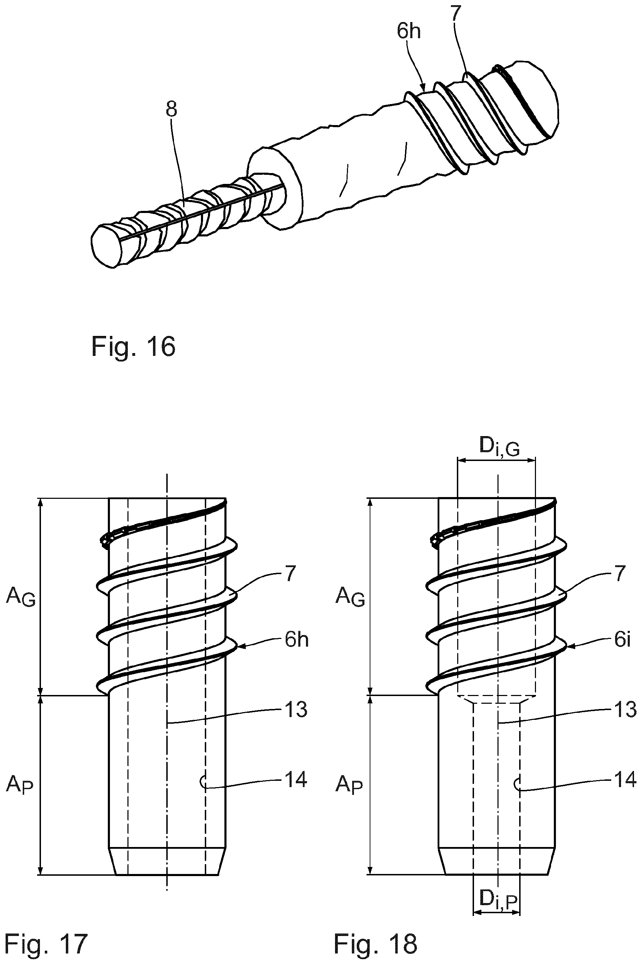

Im Folgenden wird unter Bezugnahme auf Fig. 16 und 17 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten h.

Die Verankerungseinheit umfassend das Zug-/Druck-Element 8 und das Verankerungselement 6h ist ebenfalls einteilig ausgeführt, indem die beiden Komponenten unlösbar miteinander gekoppelt sind. Dazu weist das Verankerungselement 6h eine durchgängige, zylindrische Bohrung 14 auf, wobei entlang der Längsachse 13 ein Gewindeabschnitt A_{G} und ein Pressabschitt A_{P} hintereinander angeordnet sind. In dem Gewindeabschnitt A_{G} ist das Schneidgewinde 7 angeordnet. Das Schneidgewinde 7 ist einteilig am Hülsengrundkörper 12 ausgebildet.

Die Verankerungseinheit gemäß Fig. 16 und 17 ist insbesondere als Erdverankerung geeignet.

Der Pressabschnitt ist gewindefrei ausgeführt, weist also insbesondere an seiner äußeren Zylindermantelfläche keine zusätzlichen Komponenten auf. In diesem Pressabschnitt A_{P} wird das Verankerungselement 6h mit dem Zug-/Druck-Element 8 mechanisch verpresst, also durch Umformen gefügt. Vorteilhaft ist es, wenn ein Zug-/Druck-Element 8 als Zug-/Druck-Element verwendet wird. Das Außengrobgewinde, also das Koppelgewinde 21 des Zug-/Druck-Elementes 8, bildet Hinterschnittelemente an der Oberfläche des Zug-/Druck-Elementes 8, die die Festigkeit der Fügeverbindung zusätzlich erhöhen. Gemäß dem gezeigten Ausführungsbeispiel erstrecken sich der Pressabschnitt A_{P} und der Gewindeabschnitt A_{G} jeweils etwa auf 50 % der Gesamtlänge L_{ges} des Verankerungselements 6h. Insbesondere gilt: Ap = 0,2 x L_{ges} bis 0,8 x L_{ges}, insbesondere A_{P} = 0,3 x L_{ges} bis 0,7 x L_{ges} und insbesondere Ap = 0,4 x L_{ges} bis 0,6 x L_{ges} sowie A_{G} = 0,2 x L_{ges} bis 0,8 x L_{ges}, insbesondere A_{G} = 0,3 x L_{ges} bis 0,7 x L_{ges} und insbesondere A_{G} = 0,4 x L_{ges} bis 0,6 x L_{ges}.

Es ist grundsätzlich denkbar, dass der Pressabschnitt A_{P} und der Gewindeabschnitt A_{G} zumindest bereichsweise, überlappend entlang der Längsachse 13 angeordnet sind. Dies äußert sich insbesondere dadurch, dass auch im Pressabschnitt A_{P} zumindest bereichsweise, das Schneidgewinde 7 ausgeführt ist. Allerdings wird das Schneidgewinde beim Verpressen des Verankerungselements 6h mit dem Zug-/Druck-Element 8 beeinträchtigt, insbesondere beschädigt und insbesondere zerstört werden.

Die Herstellung des Verankerungselements 6h, insbesondere mit der durchgängigen Bohrung 14, die einen konstanten Innendurchmesser aufweist, ist unkompliziert. Das Verankerungselement kann beispielsweise als Fließpressmuffe hergestellt werden.

Im Folgenden wird unter Bezugnahme auf Fig. 18 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten i.

Das Verankerungselement 6i ist insbesondere ebenfalls als Fließpressmuffe ausgeführt, allerdings in einer besonderen Ausgestaltung als Fließpressreduziermuffe. Das bedeutet, dass der Innendurchmesser der Bohrung 14 im Pressabschnitt A_{P} reduziert ist. Der Innendurchmesser D_{i, G} im Gewindeabschnitt A_{G} ist größer als der Innendurchmesser D_{i, P} im Pressabschnitt Ap. Insbesondere gilt: D_{i, G} ≥ 1,2 x D_{i, P}, insbesondere D_{i, G} ≥ 1,5 x D_{i, P}, insbesondere D_{i, G} ≥ 2,0 x D_{i, P}, insbesondere D_{i, G} ≥ 2,5 x D_{i, P} und D_{i, G} ≤ 4 x D_{i, P}.

Das Verankerungselement 6i kann vorteilhaft mit dem Zug-/Druck-Element 8 verpresst werden, da die Wandstärke im Pressabschnitt A_{P} erhöht ist. Insofern steht mehr Material für das Verpressen zur Verfügung. Der Pressvorgang ist dadurch vereinfacht. Die Presskraft ist reduziert. Die Festigkeit der Pressverbindung ist erhöht.

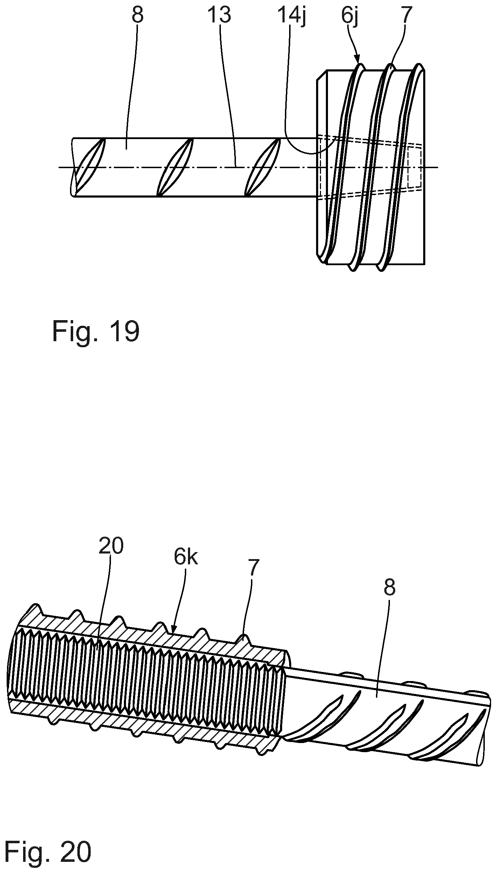

Im Folgenden wird unter Bezugnahme auf Fig. 19 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten j.

Das Verankerungselement 6j ist besonders kurzbauend ausgeführt. Das Verankerungselement 6j weist ein Verhältnis von Hülsendurchmesser D_{H} zu Gesamtlänge L_{ges} auf, das kleiner ist als 1, insbesondere kleiner als 0,8, insbesondere kleiner als 0,7, insbesondere kleiner als 0,6, insbesondere kleiner als 0,5, insbesondere kleiner als 0,3 und insbesondere größer oder gleich 0,2.

Es wurde gefunden, dass eine vergleichsweise geringe Gesamtlänge L_{ges} ausreichend ist, um eine stabile Kopplung zu erzielen, die für die Anwendung beispielsweise in einer Erdverankerung ausreicht. Insbesondere ist das Zug-/Druck-Element 8 mit dem Verankerungselement verpresst und/oder verklebt.

In dem Kopplungsbereich zwischen dem Verankerungselement 6j und dem Zug-/Druck-Element 8 ist das Zug-/Druck-Element 8 zumindest abschnittsweise konisch ausgeführt. Entsprechend ist die Bohrung 14j in dem Verankerungselement 6j zumindest abschnittsweise konisch ausgeführt.

Im Folgenden wird unter Bezugnahme auf Fig. 20 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten k.

Die Verankerungseinheit gemäß Fig. 20 ist einteilig ausgeführt, indem das Verankerungselement 6k stirnseitig mit dem Zug-/Druck-Element 8 unlösbar gekoppelt ist, insbesondere verschweißt. Dazu ist es von Vorteil, wenn das Verankerungselement 6k einen Hülsenboden 16 aufweist, der das stirnseitige Anschweißen vereinfacht.

In der teilgeschnittenen Ansicht gemäß Fig. 20 ist dargestellt, dass das Verankerungselement 6k einen Kopplungsabschnitt 20 in Form eines Feingewindes aufweist. Der Kopplungsabschnitt 20 dient beispielsweise zum Koppeln eines Koppelelements 22e mit dem Gewindekopplungsabschnitt 29 oder eines weiteren Zug-/Druck-Elements, der ein Koppelgewinde in Form eines metrischen Gewindes oder eines Feingewindes aufweist.

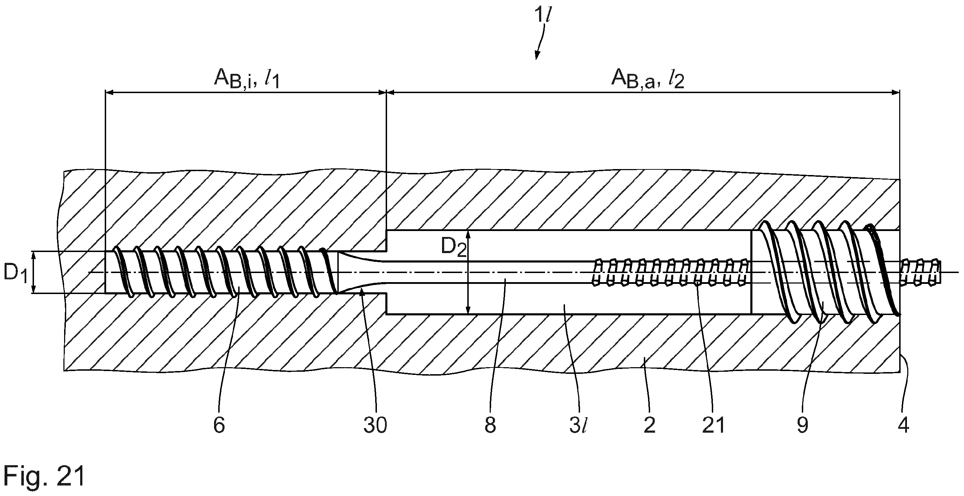

Im Folgenden wird unter Bezugnahme auf Fig. 21 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten 1.

Ein Unterschied, insbesondere zu dem Ausführungsbeispiel in Fig. 1 besteht darin, dass das Bohrloch 3*l* als Stufenbohrung ausgeführt ist. Die Stufenbohrung 3*l* weist einen innenliegenden Bohrungsabschnitt A_{B,i} und einen außenliegenden Bohrlochabschnitt A_{B,a} auf, der der Oberseite 4 des Materials 2 zugewandt angeordnet ist.

Der innenliegende Bohrlochabschnitt A_{B,i} weist einen ersten Durchmesser D₁ und eine erste Länge l₁ auf. Der außenliegende Bohrlochabschnitt A_{B,a} weist eine zweite Länge l₂ und einen zweiten Durchmesser D₂ auf. Die Summe der Längen l₁ und l₂ ergibt die Gesamtbohrlochtiefe T_{B}.

Der erste Durchmesser D₁ ist kleiner als der zweite Durchmesser D₂, wobei insbesondere gilt D₂ > D₁, insbesondere D₂ ≥ 1,2 x D₁, insbesondere D₂ ≥ 1,5 x D₁, insbesondere D₂ ≥ 1,8 x D₁, insbesondere D₂ ≥ 2,0 x D₁, insbesondere D₂ ≥ 2,5 x D₁, und insbesondere D₂ ≤ 5 x D₁.

Es versteht sich, dass das jeweilige Schneidgewinde 7 an den Verankerungselementen 6, 9 einen Schneidgewindeaußendurchmesser aufweist, der geringfügig größer ist als der jeweils korrespondierende Bohrlochdurchmesser D₁, D₂.

Dadurch, dass das Bohrloch 3*l* als Stufenbohrung ausgeführt ist, ist die Einführung und die Verankerung des ersten Verankerungselements 6 vereinfacht. Insbesondere kann das erste Verankerungselement 6 entlang des außenliegenden Bohrlochabschnitts A_{B,a} im Wesentlichen kontaktfrei und insbesondere widerstandsfrei eingeführt werden. Das Aufbringen eines Eindrehdrehmoments ist erst dann erforderlich, wenn das Verankerungselement 6 in den innenliegenden Bohrlochabschnitt A_{B,i} eingedreht wird.

Gemäß dem gezeigten Ausführungsbeispiel ist das Verankerungselement 6 einteilig an dem Zug-/Druck-Element 8 ausgebildet, also unlösbar mit dem Zug-/Druck-Element 8 verbunden. Entsprechend ist an dem Zug-/Druck-Element 8 ein Übergangsabschnitt 30 ausgebildet, entlang dessen sich der Stangendurchmesser auf den Durchmesser des Verankerungselements 6, insbesondere kontinuierlich vergrößert.

Alternativ kann das Verankerungselement 6 auch separat hergestellt und nachträglich mit dem Zug-/Druck-Element 8 gekoppelt werden.

Das Zug-/Druck-Element 8 weist ein Koppelgewinde 21 auf, das zum Koppeln mit dem zweiten Verankerungselement 9 dient. Das Koppelgewinde 21 kann ein Grobgewinde, ein metrisches Gewinde oder ein Feingewinde sein. Das zweite Verankerungselement 9 kann zusammen mit dem Zug-/Druck-Element 8 oder nachträglich in das Bohrloch 3*l* eingebracht werden.

In der gezeigten Anordnung ist das zweite Verankerungselement 9 oberflächenbündig, also bündig zur Oberseite 4 an dem Bohrloch 3*l* angeordnet. Es ist auch denkbar, dass die Verankerungsanordnung 1*l* nach innen versetzt in das Bohrloch 3*l* angeordnet ist.

Bei dem gezeigten Ausführungsbeispiel ragt das Zug-/Druck-Element 8 an der Oberseite 4 des Materials 2 aus dem Bohrloch 3*l* vor.

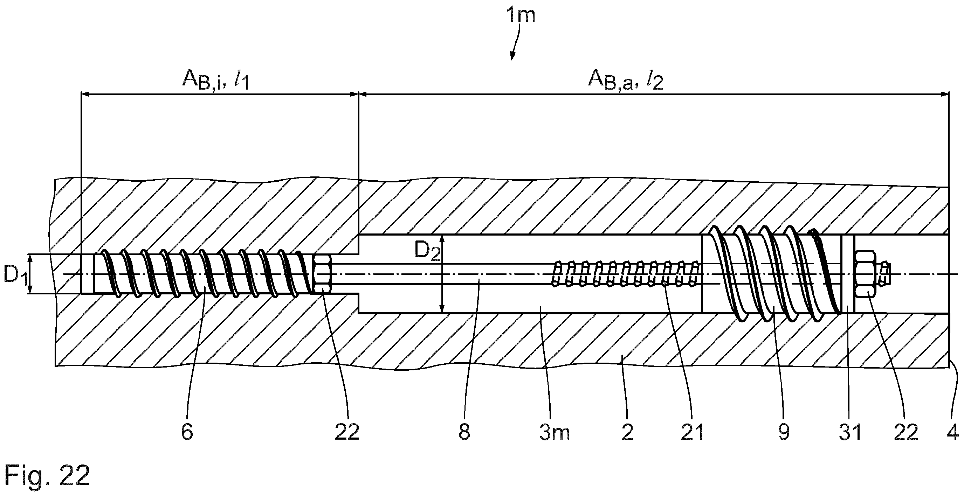

Im Folgenden wird unter Bezugnahme auf Fig. 22 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten m.

Das Ausführungsbeispiel unterscheidet sich von dem vorherigen Ausführungsbeispiel im Wesentlichen dadurch, dass das Verankerungselement 6 lösbar mit dem Zug-/Druck-Element 8 gekoppelt und mittels einer Kontermutter als Koppelelement 22 zusätzlich gehalten ist. Wie im vorherigen Ausführungsbeispiel ist das Bohrloch 3m als Stufenbohrung ausgeführt.

Anders als in dem vorherigen Ausführungsbeispiel ist die Verankerungsanordnung 1m in der Stufenbohrung 3m innenliegend angeordnet, also gegenüber der Oberseite 4 des Materials 2 zurückversetzt angeordnet. Zusätzlich ist das zweite Verankerungselement 9 an dem Zug-/Druck-Element 8 mittels eines weiteren Kopplungselements 22 in Form einer Kontermutter gehalten. Zur Abstützung ist zwischen dieser Kontermutter 22 und dem zweiten Verankerungselement 9 eine Stützscheibe 31 vorgesehen. Die beiden Koppelelemente 22 weisen jeweils ein Innengewinde auf, das mit dem Koppelgewinde 21 des Zug-/Druck-Elements korrespondiert.

Ein Außendurchmesser der Stützscheibe 31 ist insbesondere geringfügig kleiner als der zweite Durchmesser D₂. Dadurch ist das Einführen und Aufsetzen der Stützscheibe 31 auf das Zug-/Druck-Element 8 vereinfacht und insbesondere ohne Kontakt mit der Innenwand des Bohrlochs 3m, insbesondere im außenliegenden Bohrlochabschnitt A_{B,a} möglich.

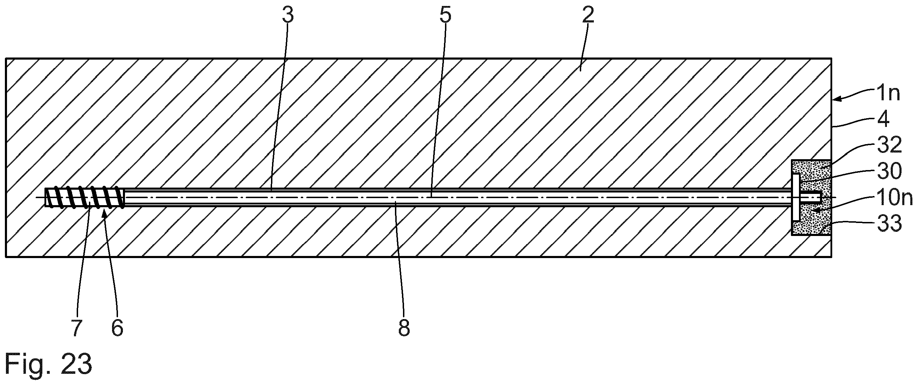

Im Folgenden wird unter Bezugnahme auf Fig. 23 ein weiteres Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten n.

Bei der Verankerungsanordnung 1n ist das zweite Verankerungselement 10n außenliegend angeordnet. Das zweite Verankerungselement 10n ist als Verankerungsscheibe mit Innengewinde ausgeführt. Das Innengewinde korrespondiert insbesondere zu dem Außengewinde des Zug-/Druck-Elements 8. Das Außengewinde ist insbesondere ein Außen-Grobgewinde, könnte aber auch als Außen-Feingewinde ausgeführt sein.

Die Verankerungsscheibe 10n kann an der dem Material 2 abgewandten Oberseite 30 einen nicht näher dargestellten Drehmomentübertragungsabschnitt aufweisen, der beispielsweise durch einen Quer-Schlitz, mindestens eine Nut und/oder Vertiefungen oder Löcher ausgeführt sein kann, die insbesondere exzentrisch bezüglich der Bohrloch-Längsachse 5 angeordnet sind.

Die Verankerungsscheibe 10n kann eine runde Außenkontur aufweisen. Es ist auch denkbar, dass die Außenkontur unrund ausgeführt ist, insbesondere polygonförmig, beispielsweise in Form eines regelmäßigen Vierkants oder Sechskants.

Im Unterschied zu der Ausführung gemäß Fig. 2 ist das zweite Verankerungselement 10n an dem Material 2, insbesondere gegenüber der Oberseite 4, zurückversetzt angeordnet. Dazu ist in dem Werkstoff 2 an der Oberseite 4 eine Vertiefung 33 angeordnet. Die Vertiefung 33 ist insbesondere konzentrisch zur Bohrloch-Längsachse 5 orientiert und insbesondere zylindrisch ausgeführt. Die Vertiefung 33 weist eine Tiefenerstreckung entlang der Bohrloch-Längsachse 5 derart auf, dass das Zug-/Druck-Element 8 gegenüber der Oberseite 4 nicht vorragt.

Es ist möglich, die Vertiefung 33 nachträglich mit einem Verfüllmaterial 32 zu verfüllen. Die Verwendung des Verfüllmaterials 32 ist optional. Als Verfüllmaterial dient insbesondere ein Kunststoffharz, insbesondere Epoxidharz. Als Verfüllmaterial 32 kann auch ein Mörtel mit Polypropylen-Partikeln, insbesondere mit Polypropylen-Fasern, verwendet werden. Ein derartiger kunststoffverstärkter Mörtel hat vorteilhafte Brandschutzeigenschaften. Mit dem Verfüllmaterial 32 gelingt es, die Vertiefung 33 vollständig zu schließen. Die Verankerungsanordnung 1n ist von außen unsichtbar in dem Material 2 angeordnet. Bei der Verwendung des Verfüllmaterials 32 ist die Ausführung der Verankerungsscheibe 10n mit unrunder Außenkontur vorteilhaft, da ein Aufdrehen des außenliegenden Verankerungselements in Folge einer Last zusätzlich erschwert ist.

## Patentansprüche

1. Verankerungseinheit zum Verankern in einem Bohrloch (3) in einem Material (2) umfassend
a. ein Verankerungselement (6; 6a; 6b; 6c; 6d; 6e; 6f; 6g; 6h; 6i; 6j; 6k) mit
i. einem eine Längsachse (13) aufweisenden Grundkörper (12),
ii. einem an dem Grundkörper (12) angeordneten Schneidgewinde (7) zum Einschneiden in eine Innenwand des Bohrlochs (3),
b. ein an dem Grundkörper (12) befestigtes Zug-/Druck-Element (8),
i. dessen Außendurchmesser (D_{a,max}) kleiner ist als ein Schneidgewindedurchmesser (D_{G}) des Schneidgewindes (7),
ii. das sich parallel zur Längsachse (13) erstreckt.

2. Verankerungseinheit gemäß Anspruch 1, **dadurch gekennzeichnet, dass** der Grundkörper (12) als Hülsengrundkörper ausgeführt ist mit einer entlang der Längsachse (13) orientierten, insbesondere durchgängigen, Bohrung (14).

3. Verankerungseinheit gemäß Anspruch 2, **dadurch gekennzeichnet, dass** die Bohrung (14) zumindest abschnittsweise ein Innengewinde (20) aufweist.

4. Verankerungseinheit gemäß einem der vorstehenden Ansprüche, **dadurch gekennzeichnet, dass** das Zug-/Druck-Element (8) zumindest abschnittsweise innerhalb der Bohrung (14) angeordnet ist.

5. Verankerungseinheit gemäß einem der vorstehenden Ansprüche, **dadurch gekennzeichnet, dass** das Zug-/Druck-Element (8) an einer Stirnwand (15) des Grundkörpers (12) befestigt ist.

6. Verankerungseinheit gemäß einem der vorstehenden Ansprüche, **dadurch gekennzeichnet, dass** das Zug-/Druck-Element (8) mit dem Grundkörper (12), insbesondere unlösbar, gefügt ist, insbesondere durch Pressen, Kleben und/oder Schweißen.

7. Verankerungseinheit gemäß einem der vorstehenden Ansprüche, **dadurch gekennzeichnet, dass** der Grundkörper (12) zumindest abschnittweise entlang der Längsachse (13), insbesondere vollständig, einen Vollquerschnitt in einer Ebene senkrecht zur Längsachse (13) aufweist.

8. Verankerungsanordnung umfassend
a. ein Material (2) mit einem Bohrloch (3),
b. eine Verankerungseinheit gemäß einem der vorstehenden Ansprüche, die in dem Bohrloch (3) mit dem Verankerungselement (6; 6a; 6b; 6c; 6d; 6e; 6f; 6g; 6h; 6i; 6j; 6k) verankert angeordnet ist.

9. Verankerungsanordnung gemäß Anspruch 8, **gekennzeichnet durch** ein zweites Verankerungselement (9; 10), das lösbar mit dem Zug-/Druck-Element (8) koppelbar ist.

10. Verankerungsanordnung gemäß Anspruch 9, **dadurch gekennzeichnet, dass** das zweite Verankerungselement (9; 10) an dem Material (2) verankert angeordnet ist.

11. Verankerungsanordnung gemäß Anspruch 9 oder 10, **dadurch gekennzeichnet, dass** das zweite Verankerungselement (9; 10) in dem Bohrloch (3) und/oder an einer Oberseite (4) des Materials (2) verankert angeordnet ist.

12. Verfahren zum Herstellen einer Verankerungsanordnung gemäß einem der Ansprüche 8 bis 11 umfassend die Verfahrensschritte
- Erzeugen eines Bohrlochs (3) in einem Material (2),
- Verankern einer Verankerungseinheit gemäß einem der Ansprüche 1 bis 7 in dem Bohrloch (3).
